# EUROPEAN PATENT SPECIFICATION

(11) **EP 0 678 866 B1**
(45) Date of publication and mention of the grant of the patent: **06.10.1999**
(21) Application number: 95105313.1
(22) Date of filing: 07.04.1995
(51) Int. Cl.: G11B 23/087

(54) **Magnetic tape cassette**
Magnetische Bandkassette
Cassette à bande magnétique

(30) Priority: 19.04.1994 JP 6534994 U
(43) Date of publication of application: 25.10.1995
(73) Proprietor: FUJI PHOTO FILM CO., LTD., Kanagawa 250-01 (JP)
(72) Inventor: Katagiri, Shingo, c/o Fuji Photo Film Co., Ltd., Odawara-shi, Kanagawa (JP); Ashikawa, Terue, c/o Fuji Photo Film Co., Ltd., Odawara-shi, Kanagawa (JP)
(74) Representative: Grünecker, Kinkeldey, Stockmair & Schwanhäusser Anwaltssozietät

(56) References cited:
- EP-A- 0 547 869
- DE-A- 2 647 691
- US-A- 5 257 752
- PATENT ABSTRACTS OF JAPAN vol. 0 no. 0 & JP-A-06 295554 (URANO KAZUAKI) 21 October 1994,

## Description

### BACKGROUND OF THE INVENTION

### 1. Field of the Invention

The present invention relates to a magnetic tape cassette, and more particularly to improvements of a magnetic tape cassette in which a pair of upper and lower cassette halves constituting a cassette case for accommodating a magnetic tape are welded to each other by ultrasonic welding.

### 2. Description of the Related Art

A magnetic tape cassette for audio or video equipment or the like is arranged such that hubs or tape reels around which a magnetic tape is wound are rotatably accommodated in a cassette case comprising a pair of upper and lower cassette halves.

Conventionally, the cassette case is used as a case by superposing the upper and lower cassette halves one on top of the other and fastening them by screws. In recent years, a magnetic tape cassette in which an attempt is made to reduce the number of component parts and improve the assembling efficiency by joining the pair of upper and lower cassette halves by ultrasonic welding has been disclosed in, for instance, Japanese Utility Model Application Laid-Open No. 3-57786 and the like.

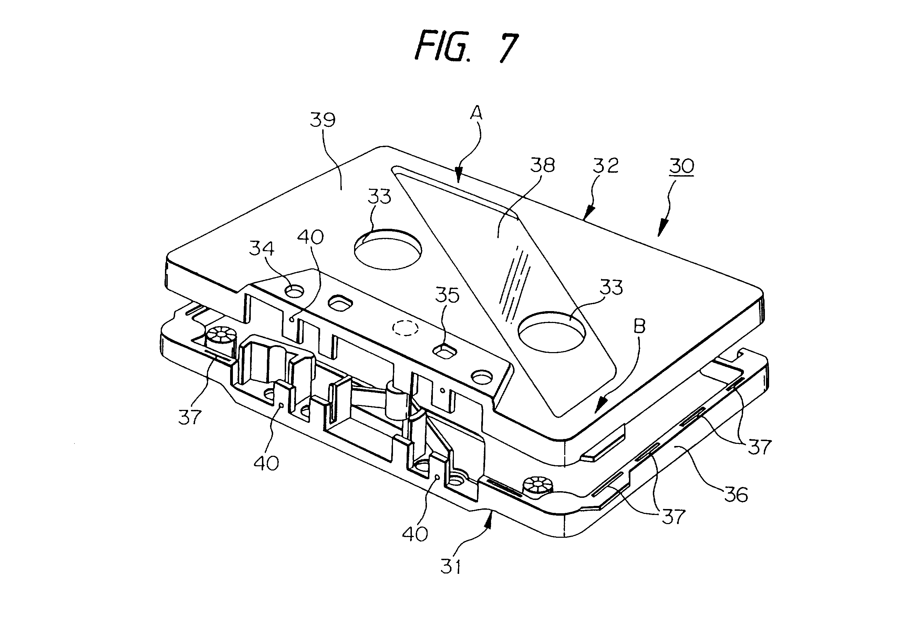

Fig. 7 is an exploded perspective view illustrating the configuration of a compact cassette case for audio equipment which is joined by the above-described ultrasonic welding. A cassette case 30 is arranged by superposing a pair of substantially symmetrical upper and lower cassette halves 31, 32 one on top of the other. Formed in each of the upper and lower cassette halves are a pair of reel-shaft inserting holes 33, a pair of capstan inserting holes 34, and a pair of positioning holes 35. Incidentally, in Fig. 7, for convenience sake, the upper cassette half 31 is illustrated on the lower side, and the lower cassette half 32 on the upper side.

Welding ribs 37 are formed projectingly at appropriate intervals on either of the mutually opposing joining faces of the upper and lower cassette halves 31, 32, i.e., on the top face portions of cassette-half peripheral side walls 36 of the upper cassette half 31. The upper and lower cassette halves 31, 32 are welded and integrated as the welding ribs 37 are thermally melted by an ultrasonic welding apparatus in the state in which the upper and lower cassette halves 31, 32 are superposed.

Here, in the case where the pair of upper and lower cassette halves 31, 32 are joined by ultrasonic welding as described above, it is conceivable to enhance the joining strength by providing the welding ribs 37 on substantially the entire peripheries of the cassette-half peripheral side walls 36 and by welding the entire periphery of the cassette case 30. However, if the welding ribs 37 are provided over the entire peripheries of the cassette-half peripheral side walls 36, the volume of the welding ribs to be thermally melted increases, and the required ultrasonic vibrational energy also increases, so that the welding time becomes long, and a large-scale ultrasonic welding apparatus is required, thereby resulting in an increase in the production cost. In addition, if the welding ribs become large, formation of a fine powder of the resin increases which is produced when adjoining portions vibrate and rub against each other during an early period of ultrasonic welding. The adhesion of such fine powder to the magnetic tape inside the cassette case can cause a decline in the recording/reproducing characteristics such as dropouts.

Meanwhile, each of the upper and lower cassette halves 31, 32 is comprised of a window member 38, which is a window portion formed of a transparent synthetic resin, and a cassette half body 39, which is a cassette-half body portion formed of a translucent synthetic resin and supports the window member 38. That is, each of the upper and lower cassette halves 31, 32 is integrally molded by injection-molding a synthetic resin material, but if the cassette half body 39 is formed of a translucent synthetic resin, it is necessary to provide the window member 38 formed of a transparent or semitransparent synthetic resin so as to make visible the state of winding of the magnetic tape accommodated in the cassette case 30.

Accordingly, in the case of a two-color magnetic tape cassette of the type in which the pair of upper and lower cassette halves are each comprised of the window portion formed of a transparent or semitransparent synthetic resin and the cassette-half body portion formed of a translucent synthetic resin and supporting the window portion, the window portion and the cassette-half body portion, which are molded separately, are conventionally formed as a unit by being joined by an adhesive agent, ultrasonic welding or the like. According to such a production method, however, an adhering process is required for performing adhesion processing by assembling the separately molded parts in a predetermined positional relationship, so that there has been a problem in that productivity declines substantially. Recently, therefore, to overcome such a problem, a two-color magnetic tape cassette is used in which the window portion and the cassette-half body portion are integrally molded by the so-called two-color molding method.

Further, in recent years, there has been a tendency to place an emphasis on the design feature of the magnetic tape cassette, and the configuration of the window portion has become complicated and large.

However, in the case of the above-described upper and lower cassette halves 31, 32 each comprised of the window member 38 and the cassette half body 39, narrow portions (e.g., in the case of the lower cassette half 32 shown in Fig. 7, portions indicated by reference characters A and B in the drawing) occur in the cassette half body 39. Namely, as is apparent from gate marks 40 illustrated in Fig. 7, when the cassette half body 39 is injection-molded, a molten resin is injected from an injection gate generally positioned in front of the cassette into an inner space in a mold for molding the cassette half body 39, and the molten resin reaches the inner space in the mold on the rear side of the cassette by passing through the narrow portions in such a manner as to detour the mold portion for forming the window member 38.

Therefore, the larger the shape of the window member 38, the narrower the narrow portions A and B become. Since the narrow portions are narrower than the remaining portion, the narrow portions become locally low-strength portions, and are therefore susceptible to damage due to a fall or the like.

In addition, in such narrow portions, since the resin is difficult to flow during injection molding, an orientation in fluidity of the resin is liable to occur, and the cooling rate becomes nonuniform as compared with the remaining portion. Hence, deformation such as warping or twisting can result. If a gap occurs between the mutually opposing joining faces of the upper and lower cassette halves 31, 32 due to such deformation, dust or the like can enter the interior of the cassette case through the gap, thereby possibly causing faulty recording or the like.

### SUMMARY OF THE INVENTION

Accordingly, an object of the present invention relates to overcoming the above-described problems, and is to provide an inexpensive and excellent magnetic tape cassette in which the pair of upper and lower cassette halves each comprised of the window portion and the cassette-half body portion for supporting the window portion are welded to each other by ultrasonic welding, and which has high strength and is free from the occurrence of a gap between the joined faces.

The above object of the present invention is attained by a magnetic tape cassette as defined in claim 1.

### BRIEF DESCRIPTION OF THE DRAWINGS

Fig. 1 is an exploded perspective view illustrating a configuration of a magnetic tape cassette case in accordance with an embodiment of the present invention;
Fig. 2 is a plan view of an upper cassette half shown in Fig. 1;
Fig. 3 is a cross-sectional view of the upper cassette half shown in Fig. 2 and taken in the direction of arrows along line 3 - 3;
Fig. 4 is a cross-sectional view of the upper cassette half shown in Fig. 2 and taken in the direction of arrows along line 4 - 4;
Fig. 5 is a cross-sectional view of the upper cassette half shown in Fig. 2 and taken in the direction of arrows along line 5 - 5;
Fig. 6 is a cross-sectional view of the upper cassette half shown in Fig. 2 and taken in the direction of arrows along line 6 - 6;
Fig. 7 is an exploded perspective view illustrating a configuration of a conventional magnetic tape cassette case;
Fig. 8 is a top view of another type of an upper cassette half having a window member which is asymmetrical in shape; and
Fig. 9 is a top view of an 8mm tape cassette to which the present invention is applied.

### DETAILED DESCRIPTION OF THE PREFERRED EMBODIMENT

Referring now to the accompanying drawings, a detailed description will be given of a magnetic tape cassette in accordance with the present invention.

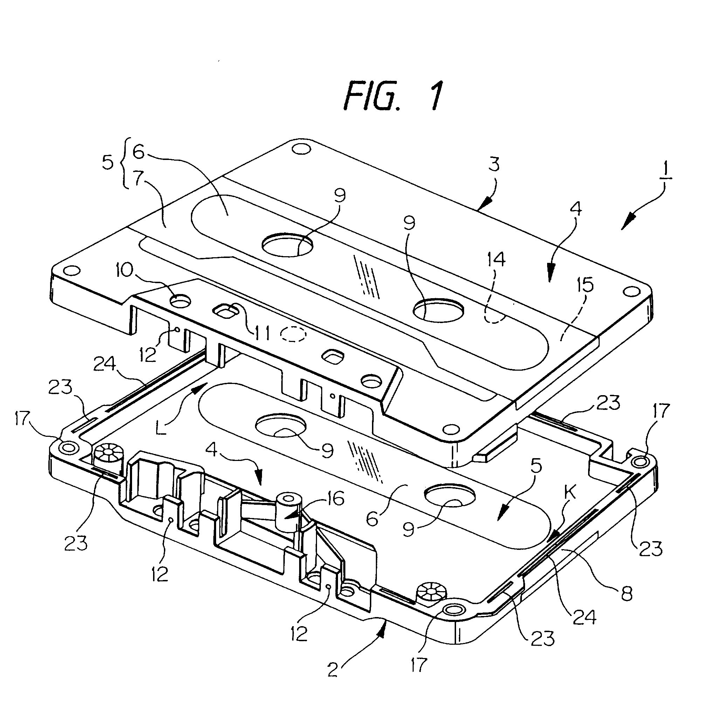

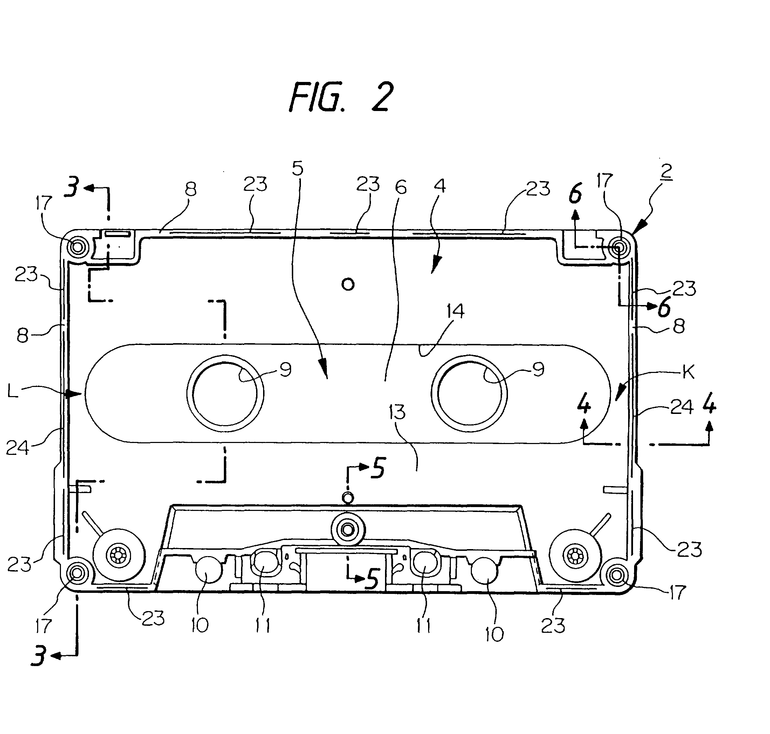

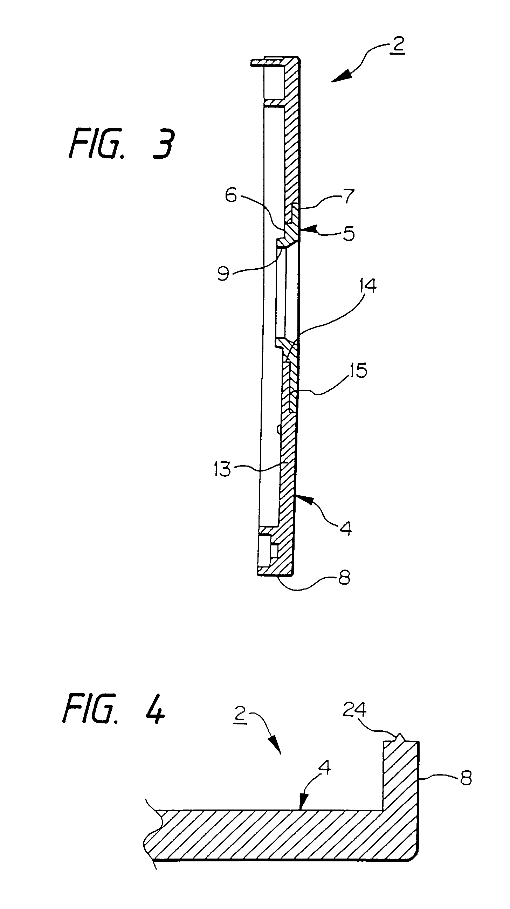

Fig. 1 is an exploded perspective view illustrating the configuration of a magnetic tape cassette case in accordance with an embodiment of the present invention; Fig. 2 is a plan view of an upper cassette half shown in Fig. 1; and Fig. 3 is a cross-sectional view of the upper cassette half shown in Fig. 2 and taken in the direction of arrows along line 3 - 3.

The magnetic tape cassette shown in Fig. 1 is an audio compact cassette, and a synthetic resin-made cassette case 1 for accommodating a magnetic tape wound around unillustrated hubs is formed such that a pair of substantially symmetrical upper and lower cassette halves 2, 3 are superposed one on top of the other, and are then joined by welding. Incidentally, in Fig. 1, for convenience sake, the upper cassette half 2 is illustrated on the lower side, and the lower cassette half 3 on the upper side.

Each of the upper and lower cassette halves 2, 3 is comprised of a window member 5, which is a window portion formed of a transparent synthetic resin to make visible the state of winding of the magnetic tape accommodated in the cassette case 1, and a cassette half body 4, which is a cassette-half body portion formed of a translucent synthetic resin and supports the window member 5. Preferably, each of the upper and lower cassette halves 2, 3 is integrally molded by the two-color molding method. Further, the upper and lower cassette halves 2, 3 are formed as a unit as the mutually opposing joining faces of the upper and lower cassette halves 2, 3 are joined by welding.

Since the upper and lower cassette halves 2, 3 have a substantially symmetrical structure, by citing the case of the upper cassette half 2 as an example, a description will be given below of the structures of the window member 5 and the cassette half body 4, the structure of the welding ribs for ultrasonic-welding the upper and lower cassette halves 2, 3, and so on.

As shown in Figs. 1 to 3, the window member 5 has a structure which is provided with a central portion 6, which is substantially elliptical in a plan view, and a thin-walled retaining plate portion 7, which protrudes from the peripheral edge of the central portion 6. Provided in the central portion 6 are a pair of reel-shaft inserting holes 9 for rotatably supporting unillustrated hubs and for allowing hub-driving shafts (reel shafts) of a magnetic tape recording/reproducing apparatus to be inserted therethrough.

Meanwhile, the cassette half body 4 has a bottom plate portion 13 with which the window member 5 is formed integrally as shown in Fig. 3, as well as cassette-half peripheral side walls 8 provided uprightly on the outer peripheral edges of the bottom plate portion 13 and having top face portions serving as joining faces of the upper and lower cassette halves 2, 3. An elliptical opening 14 corresponding to the configuration of the contour of the central portion of the window member 5 is formed in a substantially central portion of the bottom plate portion 13, and capstan inserting holes 10 and positioning holes 11 are formed on the front side of the cassette.

In addition, that portion of the bottom plate portion 13 which corresponds to the retaining plate portion 7 of the window member 5 is formed as a stepped portion 15 having a step by the portion of the thickness of the retaining plate portion 7, such that the outer surface of the window member 5 and the outer surface of the bottom plate portion 13 of the cassette half body 4 are continuously formed flush with each other.

In the arrangements of the above-described upper and lower cassette halves 2, 3, the narrow portions (in the case of the upper cassette half 2 shown in Figs. 1 and 2, portions indicated by reference characters K and L in the drawings) of the cassette half body 4, where the interval between the peripheral edge of the opening 14 and the cassette-half peripheral side wall 8 is narrow as compared with the remaining portion are located on the left- and right-hand sides of the cassette.

Namely, as is apparent from gate marks 12 shown in Fig. 1, when the cassette half body 4 is injection-molded, a molten resin is injected from an injection gate positioned in front of the cassette into an inner space in a mold for molding the cassette half body 4, and the molten resin reaches the inner space in the mold on the rear side of the cassette by passing through the narrow portions in such a manner as to detour the mold portion for forming the opening 14. Accordingly, in the narrow portions of the cassette half body 4, since the resin is difficult to flow during injection molding, an orientation in fluidity of the resin is liable to occur, and the cooling rate becomes nonuniform as compared with the remaining portion. Hence, deformation such as warping or twisting is liable to occur.

Furthermore, welding ribs 21, 22, 23, and 24 are provided appropriately on the joining faces of the upper cassette half 2 facing the joining faces of the lower cassette half 3 so as to weld and join the upper and lower cassette halves 2, 3 by ultrasonic welding, while the joining faces of the lower cassette half 3 are formed into a flat structure devoid of the welding ribs.

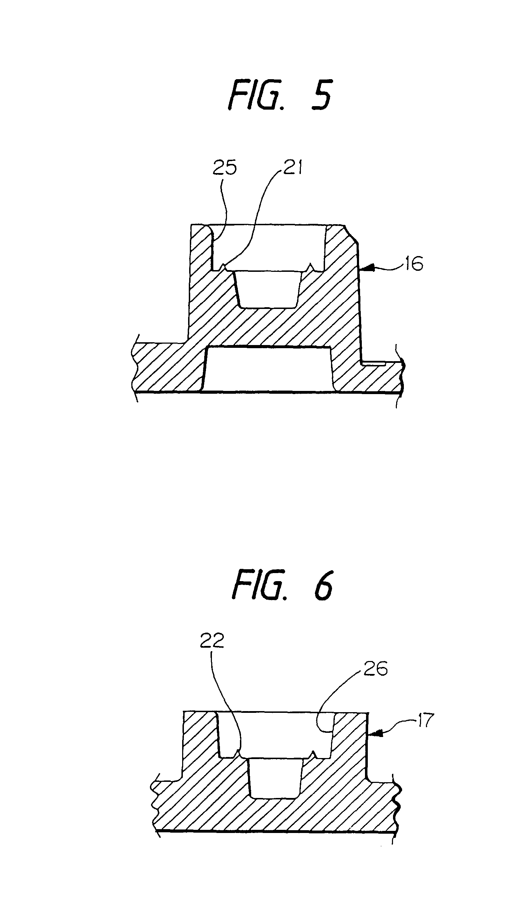

As shown in Figs. 5 and 6, the welding ribs 21, 22 are respectively formed by annular protrusions having a triangular cross-sectional shape, and are provided on an inner bottom of a fitting boss hole 25 formed in an abutment portion 16 provided in the vicinity of a head-inserting opening in the cassette half body 4, and on an inner bottom of a fitting boss hole 26 formed in an abutment portion 17 formed in each of the four corners of the cassette half body 4, respectively.

As shown in Figs. 1 and 2, the welding ribs 23 which are linear protrusions having a triangular cross-sectional shape are disposed with an appropriate interval and an appropriate length along the top face portion of each cassette-half peripheral side wall 8.

Furthermore, the welding ribs 24, which are relatively elongated protrusions extending without a joint along at least the area of the narrow portion, are respectively disposed on the top face portions of the cassette-half peripheral side walls 8 adjacent to the respective narrow portions (in the case of the upper cassette half 2 shown in Figs. 1 and 2, portions indicated by reference characters K and L in the drawings) of the cassette half body 4 that are located on the left- and right-hand sides of the cassette.

Then, as the joining faces of the upper and lower cassette halves 2, 3 are made to abut against each other, and ultrasonic vibrations are applied to the portions where the welding ribs 21, 22, 23, and 24 are formed by means of the ultrasonic welding apparatus, the welding ribs 21, 22, 23, and 24 are thermally melted to adhere and join the upper and lower cassette halves 2, 3, thereby obtaining the integrated cassette case 1.

Namely, the welding ribs 24 provided on the top face portions of the cassette-half peripheral side walls 8 adjacent to the narrow portions of the cassette half body 4 are ultrasonic-welded by being thermally melted as described above, the strength of portions in the vicinities of the narrow portions is improved, so that the occurrence of damage due to a fall or the like is substantially avoided.

In addition, since the joining faces of the cassette-half peripheral side walls 8 adjacent to the narrow portions are completely welded by the thermally melted welding ribs 24, in the event that deformation such as warping or twisting has occurred in the vicinities of the narrow portions, no gap is formed between the joined faces of the upper and lower cassette halves 2, 3. Accordingly, there is no possibility of dust or the like entering the interior of the cassette case through a gap which is otherwise formed, thereby causing faulty recording or the like.

Furthermore, since the welding ribs 21, 22, 23, and 24 are respectively provided in a plural number effectively with appropriate lengths and intervals, it is possible to avoid a situation in which the volume of the welding ribs to be thermally melted increases, and the required ultrasonic vibrational energy increases as in the case of the magnetic tape cassette in which the welding ribs are provided on substantially the entire peripheries of the abutment faces of the cassette halves. Namely, with the magnetic tape cassette of the present invention, a rise in the production cost due to the long welding time and because a large-scale ultrasonic welding apparatus is required is prevented, and there is no increase in the amount of fine powder of the resin occurring during an early period of ultrasonic welding.

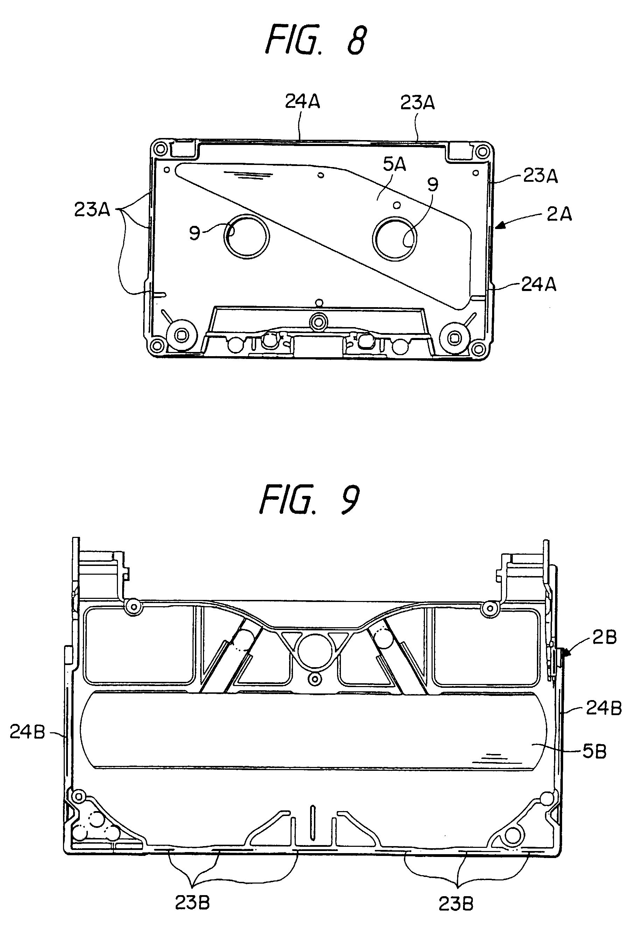

Fig. 8 is a top view of the upper cassette half 2A having a window member 5A which is asymmetrical in shape. Similar to the foregoing embodiment, welding ribs 23A and 24A are provided appropriately on the joining faces of the upper cassette half 2A. More specifically, the welding ribs 23A which are linear protrusions and the welding ribs 24A which are relatively elongated protrusions extending without a joint along at least the area of the narrow portion, are respectively disposed at appropriate portions in correspondence with the configuration of the window portion. The other structure of the arrangement shown in Fig. 8 is the same as that of the embodiment illustrated in Figs. 1 and 2.

It should be noted that the cross-sectional configuration of the welding rib in accordance with the present invention is not limited to the triangular shape in the above-described embodiment. The joining faces of the mating cassette half against which the welding ribs abut do not have to be mere flat faces, and it is conceivable to adopt a structure in which the joining faces of the mating cassette half are provided with a width smaller than the width of the welding rib in correspondence with the configuration of the welding rib. In addition, the length and the position where each welding rib is formed may be altered, as required, in correspondence with the configuration of the window portion.

Although, in the above-described embodiment, an illustration has been given of the case where the present invention is applied to an audio compact cassette tape, the present invention is not limited to the same, and it goes without saying that the present invention is applicable to various magnetic tape cassettes having similar arrangements. For example, the invention is also applicable to an 8mm tape cassette shown in Fig. 9 in which a window member 5B is disposed merely on an upper cassette half 2B. In this case, as similar to the foregoing embodiment and arrangement, the welding ribs 23B which are linear protrusions and the welding ribs 24A, which are relatively elongated protrusions extending without a joint along at least the area of the narrow portion are disposed at appropriate portions in correspondence with the configuration of the window portion.

The magnetic tape cassette in accordance with the present invention is a magnetic tape cassette in which a pair of upper and lower cassette halves constituting a cassette case for accommodating a magnetic tape are each provided with a window portion for making visible a winding state of the magnetic tape accommodated in the case and a cassette-half body portion for supporting the window portion, and the upper and lower cassette halves are welded and joined by means of a plurality of welding ribs provided projectingly on joining faces of mutually opposing peripheral side walls of the cassette-half body portion, wherein each of the welding ribs adjacent to a narrow portion of the cassette-half body portion where an interval between a peripheral edge of the window portion and the peripheral side wall is narrow as compared with a remaining portion of the cassette-half body portion is provided in such a manner as to extend without a joint along at least an area of the narrow portion.

Accordingly, since the joining faces of the peripheral side walls adjacent to the respective narrow portions of the cassette half body portions are ultrasonic-welded, the strength of portions in the vicinities of the narrow portions is improved, so that damage due to a fall or the like will be avoided.

In addition, in the event that deformation such as warping or twisting has occurred in the vicinities of the narrow portions, no gap is formed between the joined faces of those mutually opposing peripheral side walls of the cassette-half body portions that are respectively adjacent to the narrow portions. Accordingly, there is no possibility of dust or the like entering the interior of the cassette case through a gap which is otherwise formed, thereby causing faulty recording or the like.

Furthermore, since the welding ribs are respectively provided in a plural number effectively with appropriate lengths and intervals, it is possible to avoid a situation in which the volume of the welding ribs to be thermally melted increases, and the required ultrasonic vibrational energy increases as in the case of the magnetic tape cassette in which the welding ribs are provided on substantially the entire peripheries of the abutment faces of the cassette halves. Hence, a rise in the production cost due to the long welding time and also because a large-scale ultrasonic welding apparatus is required is thereby prevented.

Accordingly, it is possible to provide an inexpensive and excellent magnetic tape cassette in which the pair of upper and lower cassette halves each comprised of the window portion and the cassette-half body portion for supporting the window portion are welded to each other by ultrasonic welding, and which has high strength and is free from the occurrence of a gap between the joined faces.

## Claims

1. A magnetic tape cassette comprising:
a) upper and lower cassette halves (2,3) which together form a cassette case (1) for accommodating a magnetic tape, at least one of said upper and lower cassette halves including a window portion (5) for viewing a winding state of the magnetic tape accommodated in said cassette case (1) and a cassette-half body portion (4) for supporting said window portion (5), said cassette-half body portion (4) having a peripheral side wall, a narrow portion (K, L) located between a peripheral edge of said window portion and said peripheral side wall, and a remaining portion, said narrow portion (L, K) being narrow as compared with said remaining portion of said cassette-half body(4); and
b) a plurality of welding ribs provided projectingly on a joining face of said peripheral side wall of said cassette-half body portion (4) and including at least one welding rib (24) disposed adjacent to said narrow portion (K, L), wherein said at least one welding rib disposed adjacent to said narrow portion (K, L) of said cassette-half body portion (6) extends continuously without a break along at least a full extent of said narrow portion (K, L).

2. A magnetic tape cassette according to claim 1, further comprising welding ribs (21, 22) of annular shape.

3. A magnetic tape cassette according to claims 1 or 2, wherein said welding ribs are of triangular cross- . sectional shape.

4. The magnetic tape cassette according to claims 1-3, wherein the joining face of the cassette-half opposing the welding rib is provided with a width smaller than the width of the welding rib in correspondence with the configuration of the welding rib.

5. A magnetic tape cassette according to claim 2, wherein said annular welding rib (21, 22) is provided on a inner bottom of a boss hole (25, 26).

6. The magnetic tape cassette according to claim 5, wherein said boss hole (25) containing said annular welding ribs (22) are formed in each of the four corners of one of the cassette half bodies (4), respectively.

7. The magnetic tape cassette according to one of the claims 1-6, wherein plural welding ribs (23) are provided with intervals therebetween.

8. A magnetic tape cassette according to one of the claims 1-7, wherein said window portion (5a) is asymmetrical and wherein said welding ribs (23a, 23, 24a) are asymmetrical in accordance with the window portion so that a welding rib (24a) extends without a joint along at least the area of an narrow portion of the cassette body (4).

## Patentansprüche

1. Magnetbandkassette mit:
a) oberen und unteren Kassettenhälften (2, 3), die zusammen ein Kassettengehäuse (1) zum Aufnehmen eines Magnetbandes bilden, wobei zumindest eine der oberen und unteren Kassetten hälften einen Fensterbereich (5) zum Betrachten eines Abwickelzustandes des im Kassettengehäuse (1) untergebrachten Magnetbands und einen Kassettenhälfte-Körperbereich (4) zum Befestigen des Fensterbereichs (5) einschließt, wobei der Kassettenhälfte-Körperbereich (4) eine periphere Seitenwand, einen engen Bereich (K, L), der zwischen einem äußeren Rand des Fensterbereichs und der peripheren Seitenwand plaziert ist, und einen restlichen Bereich hat, wobei der enge Bereich (L, K) im Vergleich zu dem restlichen Bereich des Kassettenhälften-Körpers (4) schmal ist; und
b) mehreren Schweißrippen, die an einer Verbindungsfläche der peripheren Seitenwand des Kassettenhälfte-Körperbereichs (4) hervorstehend vorgesehen sind und zumindest eine Schweißrippe (24) einschließen, die benachbart zum engen Bereich (K, L) angeordnet ist, wobei die zumindest eine Schweißrippe, die zum engen Bereich (K, L) des Kassettenhälften-Körperbereichs (4) benachbart ist, sich kontinuierlich ohne Unterbrechung entlang zumindest eines vollständigen Ausmaßes des engen Bereichs (K, L) erstreckt.

2. Magnetbandkassette gemäß Anspruch 1, die weiterhin Schweißrippen (21, 22) von ringförmiger Gestalt umfaßt.

3. Magnetbandkassette gemäß Anspruch 1 oder 2, wobei die Schweißrippen eine dreieckige Querschnittsform aufweisen.

4. Die Magnetbandkassette entsprechend den Ansprüchen 1-3, wobei die Verbindungsfläche der Kassetten hälfte, die der Schweißrippe gegenüberliegt, mit einer Breite entsprechend der Ausgestaltung der Schweißrippe vorgesehen ist, die kleiner als die Breite der Schweißrippe ist.

5. Magnetbandkassette gemäß Anspruch 2, wobei die ringförmige Schweißrippe (21, 22) an einer inneren Unterseite einer Flanschöffnung (25, 26) vorgesehen ist.

6. Die Magnetbandkassette gemäß Anspruch 5, wobei die Flanschöffnungen (25), die die ringförmigen Schweißrippen (22) enthalten, jeweils in jeder der vier Ecken eines der Kassettenhälften-Körper (4) ausgebildet sind.

7. Die Magnetbandkassette gemäß einem der Ansprüche 1 bis 6, wobei mehrere Schweißrippen (23) mit dazwischenliegenden Abständen vorgesehen sind.

8. Magnetbandkassette gemäß einem der Ansprüche 1-7, wobei der Fensterbereich (5a) asymmetrisch ist und wobei die Schweißrippen (23a, 23, 24a) mit dem Fensterbereich übereinstimmend asymmetrisch sind, so daß eine Schweißrippe (24a) sich ohne Fuge entlang zumindest dem Gebiet eines engen Bereichs des Kassettenkörpers (4) erstreckt.

## Revendications

1. Cassette à bande magnétique comportant:
a) des moitiés de cassette supérieure et inférieure (2, 3) qui forment ensemble un boîtier de cassette (1) destiné à 5 recevoir une bande magnétique, au moins l'une desdites moitiés de cassette supérieure et inférieure comprenant une partie de fenêtre (5) pour l'observation d'un état d'enroulement de la bande magnétique logée dans ledit boîtier de cassette (1) et une partie de corps de moitié de 10 cassette (4) destinée à supporter ladite partie de fenêtre (5), ladite partie de corps de moitié de cassette (4) ayant une paroi latérale périphérique, une partie étroite (K, L) située entre un bord périphérique de ladite partie de fenêtre et ladite paroi latérale périphérique, et une 15 partie restante, ladite partie étroite (L, K) étant étroite par rapport à ladite partie restante dudit corps de moitié de cassette (4); et
b) une multiplicité de nervures de soudage prévues de façon saillante sur une face de jonction de ladite paroi latérale 20 périphérique de ladite partie de corps de moitié de cassette (4) et comprenant au moins une nervure de soudage (24) disposée à côté de ladite partie étroite (K, L), ladite au moins une nervure de soudage disposée de façon adjacente à ladite partie étroite (K, L) de ladite partie 25 de corps de moitié de cassette (6) s'étendant sans interruption le long d'au moins étendue complète de ladite partie étroite (K, L).

2. Cassette à bande magnétique selon la revendication 1, comportant en outre des nervures de soudage (21, 22) de forme annulaire.

3. Cassette à bande magnétique selon les revendications 1 ou 2, dans laquelle lesdites nervures de soudage sont de forme en coupe triangulaire.

4. Cassette à bande magnétique selon les revendications 1 10 à 3, dans laquelle la face de jonction de la moitié de cassette opposée à la nervure de soudage est prévue avec une largeur plus petite que la largeur de la nervure de soudage en correspondance avec la configuration de la nervure de soudage.

5. Cassette à bande magnétique selon la revendication 2, dans laquelle ladite nervure annulaire de soudage (21, 22) est prévue sur un fond intérieur d'un trou de bossage (25, 26).

6. Cassette à bande magnétique selon la revendication 5, dans laquelle ledit trou de bossage (25) contenant lesdites nervures annulaires de soudage (22) est formé dans chacun des quatre coins d'un des corps de moitié de cassette (4), 25 respectivement.

7. Cassette à bande magnétique selon l'une des revendications 1 à 6, dans laquelle plusieurs nervures de soudage (23) sont pourvues d'intervalles entre elles.

8. Cassette à bande magnétique selon l'une des revendications 1 à 7, dans laquelle ladite partie de fenêtre (5a) est asymétrique et lesdites nervures de soudage (23a, 23, 24a) sont asymétriques en fonction de la partie de fenêtre de sorte qu'une nervure de soudage (24a) s'étend sans jonction le long d'au moins la surface d'une partie étroite du corps de cassette (4).
